# EUROPÄISCHE PATENTSCHRIFT

(11) **EP 4 522 880 B1**
(45) Veröffentlichungstag und Bekanntmachung des Hinweises auf die Patenterteilung: **29.07.2026**
(21) Anmeldenummer: 23712149.6
(22) Anmeldetag: 13.03.2023
(51) Int. Cl.: F16C 35/073, F16C 23/08, F16C 19/38

(54) **WÄLZLAGERANORDNUNG**
ROLLING BEARING ARRANGEMENT
AGENCEMENT DE PALIER À ROULEMENT

(30) Priorität: 09.05.2022 DE 102022111438
(43) Veröffentlichungstag der Anmeldung: 19.03.2025
(73) Patentinhaber: Schaeffler Technologies AG & Co. KG, 91074 Herzogenaurach (DE)
(72) Erfinder: ZIMMERMANN, Klaus, 97723 Oberthulba (DE); HAN, Huimin, Taicang Jiangsu, 215400 (CN)
(74) Vertreter: Schaeffler Technologies
(86) Internationale Anmeldenummer: PCT/DE2023/100184
(87) Internationale Veröffentlichungsnummer: WO 2023/217312

(56) Entgegenhaltungen:
- DE-C- 611 523
- JP-A- H11 247 871
- US-A- 3 395 956

## Beschreibung

Die vorliegende Erfindung betrifft eine Wälzlageranordnung umfassend ein auf einer Spannhülse angeordnetes Wälzlager, wobei das Wälzlager zumindest einseitig axial mittels einer Nutmutter gesichert ist und axial zwischen der Nutmutter und dem Wälzlager eine ringförmige Sicherungsscheibe angeordnet ist, mittels derer eine Verdrehsicherung zwischen der Spannhülse und der Nutmutter ausgebildet ist.

Wälzlager können insbesondere dazu verwendet werden, Drehbewegungen mit möglichst geringen Reibungsverlusten zu ermöglichen. Wälzlager können insbesondere zur Fixierung und/oder Lagerung von Achsen und Spannhülsen eingesetzt werden, wobei sie, je nach Bauform, radiale und/oder axiale Kräfte aufnehmen und gleichzeitig die Rotation der Spannhülse oder der so auf einer Achse gelagerten Bauteile ermöglichen. Hierzu sind zwischen einem Innenring und einem Außenring des Wälzlagers abrollende Wälzkörper angeordnet. Zwischen diesen drei Hauptkomponenten Innenring, Außenring und den Wälzkörpern tritt innerhalb des Wälzlagers in der Regel hauptsächlich Rollreibung auf. Da die Wälzkörper im Innen- und Außenring bevorzugt auf gehärteten Stahlflächen mit optimierter Schmierung abrollen können, ist die Rollreibung derartiger Lager relativ gering.

Es existieren eine Reihe von Problemen im Zusammenhang mit der Kontamination von Wälzlagern. In der Regel wird hierbei versucht das Problem durch die Verwendung von Dichtungsringen mit mehreren Dichtungslippen zu lösen. Das Abdichten von Wälzlagern mit Dichtungen oder Blenden ist bereits eine etablierte Methode, um das Eindringen von Fluiden, wie beispielsweise Öl, Wasser oder auch Schmutzpartikeln zu verhindern. Derartige Lagerungskonzepte werden häufig in Kombination mit einer Lebensdauerschmierung mit Fett verwendet.

Besondere Herausforderung an derartige Lager stellen beispielsweise landwirtschaftliche Anwendungen, wie zum Beispiel in landwirtschaftlichen Maschinen bzw. Fahrzeugen wie Traktoren. Aufgrund des befahrenen Untergrunds weisen derartige Anwendungsfälle sehr herausfordernde Belastungsprofile für Wälzlager auf. Gleichzeit kann das Eindringen von Schmutzstoffen in das Lager das Lager schädigen und zu einem vorzeitigen Funktionsversagen führen.

Insbesondere ist es hierbei ein Problem, dass es durch Verkippen der Spannhülse und/oder axialen Versatz zwischen Lagerinnenring und Lageraussenring oder Falschmontage zu einer Kollision zwischen Sicherungsscheibe und der Dichtung des Lagers kommen kann, wodurch dessen Dichtwirkung beeinträchtigt oder sogar vollkommen zerstört wird.

JP H11 247871 A offenbart die Merkmale des Oberbegriffs von Anspruch 1.

Es ist daher die Aufgabe der Erfindung eine Wälzlageranordnung, die eine verbesserte und betriebssichere Dichtung des Wälzlagers aufweist.

Diese Aufgabe wird gelöst durch eine Wälzlageranordnung umfassend ein auf einer Spannhülse angeordnetes Wälzlager, wobei das Wälzlager zumindest einseitig axial mittels einer Nutmutter gesichert ist und axial zwischen der Nutmutter und dem Wälzlager eine ringförmige Sicherungsscheibe angeordnet ist, mittels derer eine Verdrehsicherung zwischen der Spannhülse und der Nutmutter ausgebildet ist, wobei die ringförmige Sicherungsscheibe eine Mehrzahl von monolithisch durch Verstemmung mit der Sicherungsscheibe ausgebildeten und axial wirkenden Abstandsmittel aufweist, welche in Umfangsrichtung voneinander beabstandet angeordnet sind.

Hierdurch wird der Vorteil erzielt, dass auf einer Spannhülse ein ortsunabhängiges Verspannen eines, insbesondere, abgedichteten Wälzlagers ermöglicht wird. Die Abstandsmittel bilden also eine axiale Planfläche zwischen Sicherungsscheibe und dem Wälzlager, insbesondere dem abgedichteten kegligen Wälzlagerinnenring, so dass dadurch im Falle einer Verkippung der Spannhülse und/oder und einem axialen Versatz zwischen Wälzlagerinnenring und Wälzlageraussenring und/oder Falschmontage die Kollisionsgefahr zwischen besagter Sicherungsscheibe und der Dichtung des abgedichteten Wälzlagers ausgeschlossen werden kann. Dadurch ist eine Beschädigung der Dichtung und eine dadurch einhergehende Dichtwirkungsreduzierung ausgeschlossen, wodurch sich die Gefahr eines vorzeitigen Wälzlagerausfalls drastisch reduziert.

Durch die in Umfangsrichtung beabstandeten Abstandsmittel kann ferner auch ein Spalt in der zwischen der Sicherungsscheibe und beispielsweise dem abgedichteten kegligen Wälzlagerinnenring definiert sein, durch den beispielsweise im Falle einer Nachschmierung veraltetes und verbrauchtes Schmierfett aus der Dichtung des Wälzlagers entweichen kann.

Es ist bevorzugt, dass die axiale Erstreckung der Abstandsmittel aus der ringförmigen Sicherungsscheibe in etwa der axialen Dicke der Sicherungsscheibe entspricht, so dass der axiale Abstand zwischen der Nutmutter und dem Wälzlager in etwa verdoppelt ist, verglichen zu einer Sicherungsscheibe ohne Abstandsmittel.

Im Sinne dieser Anmeldung ist unter einer monolithischen Verstemmung eine plastische Verformung durch einen Materialversatz innerhalb der Sicherungsscheibe zu verstehen.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Ein Wälzlager kann ein- oder mehrreihig ausgebildet sein. Bevorzugt ist das Wälzlager als ein zweireihiges Tonnenrollenlager konfiguriert.

Das Wälzlager kann einen Innenring umfassen. Der Innenring kann insbesondere die Wälzlager aufnehmende Spannhülse mit dem Wälzlager bzw. den Wälzkörpern verbinden. Dabei kann insbesondere die Spannhülse mit der der Spannhülse zugewandten Seite der Mantelfläche des Innenrings verbunden sein, wobei auf der dieser Mantelfläche gegenüberliegenden Innenringlaufbahn die Wälzkörper des Wälzlagers wälzen. Der Innenring kann aus einem metallischen und/oder keramischen Werkstoff gebildet sein. Es ist grundsätzlich denkbar, den Innenring einteilig oder mehrteilig, insbesondere zweiteilig auszubilden.

Der Innenring kann einen Innenringeinstich aufweisen. In einem Innenringeinstich kann insbesondere eine Deckscheibe, Dichtscheibe und/oder Dichtung insbesondere kraft- und/oder formschlüssig angeordnet sein. Bevorzugt ist der Innenringeinstich als eine umlaufende Nut in dem Innenring ausgebildet.

Das Wälzlager kann ferner einen Außenring besitzen. Der Außenring kann insbesondere die Wälzlager aufnehmende Lagerung mit dem Wälzlager bzw. den Wälzkörpern verbinden. Dabei kann insbesondere die Lagerung mit der der Lagerung zugewandten Seite der Mantelfläche des Außenrings verbunden sein, wobei der dieser Mantelfläche gegenüberliegenden Außenringlaufbahn die Wälzkörper des Wälzlagers wälzen. Der Außenring kann aus einem metallischen und/oder keramischen Werkstoff gebildet sein. Es ist grundsätzlich denkbar, den Außenring einteilig oder mehrteilig, insbesondere zweiteilig auszubilden.

Das Wälzlager umfasst ferner Wälzkörper. Die Wälzkörper haben abhängig von der Wälzlagerbauart die Form einer Kugel oder einer Rolle. Sie wälzen sich auf den Laufbahnen des Wälzlagers ab und haben die Aufgabe, die auf ein Radialwälzlager wirkende Kraft vom Außenring auf den Innenring und umgekehrt zu übertragen. Bei einem Axialwälzlager übertragen die Wälzkörper die auf das Axialwälzlager wirkenden Kräfte zwischen den Laufscheiben. Rollenförmige Wälzkörper werden auch als Rollenwälzkörper und kugelförmige Wälzkörper als Lagerkugel bezeichnet.

Rollenförmige Wälzkörper können beispielsweise ausgewählt sein aus der Gruppe der symmetrischen Pendelrollen, der asymmetrischen Pendelrollen, der Zylinderrollen, der Nadelrollen und/oder der Kegelrollen.

Wälzkörper können in einem Käfig oder durch Wälzkörperdistanzstücke geführt und voneinander beabstandet sein. Es ist grundsätzlich auch denkbar, ein käfigloses Wälzlager auszubilden, welches auch als vollrolliges Wälzlager bezeichnet wird. Bei vollrolligen Wälzlagern können sich benachbarte Wälzkörper kontaktieren.

Ein Wälzlager kann einen Käfig aufweisen, wobei der Käfig die Wälzkörper führt. Der Käfig so ausgebildet, dass die Wälzkörperkugeln und/oder die Wälzkörperrollen voneinander beabstandet werden, damit beispielsweise die Reibung und Wärmeentwicklung der Wälzkörper möglichst gering gehalten wird. Ferner hält der Käfig die Wälzkörperkugeln und/oder Wälzkörperrollen in einem festen Abstand beim Abwälzen zueinander, wodurch eine gleichmässige Lastverteilung erzielt werden kann. Der Käfig kann einstückig oder mehrstückig ausgeführt sein.

Die Wälzkörper können innerhalb des Wälzlagers insbesondere auf der Innenringlaufbahn des Innenrings abwälzen. Hierzu kann vorteilhafter Weise die Oberfläche der Innenringlaufbahn entsprechend abriebfest ausgebildet sein, beispielsweise auch durch ein entsprechendes Oberflächenbehandlungsverfahren und/oder durch Aufbringen einer entsprechenden zusätzlichen Materialschicht.

Die Innenringlaufbahn kann eben oder profiliert ausgebildet sein. Eine profilierte Ausgestaltung der Innenringlaufbahn kann beispielsweise zur Führung der Wälzkörper auf der Innenringlaufbahn dienen. Eine ebene Ausformung der Innenringlaufbahn kann hingegen beispielsweise eine gewisse axiale Verschiebbarkeit der Wälzkörper auf der Innenringlaufbahn erlauben.

Die Wälzkörper können innerhalb des Wälzlagers insbesondere auf der Außenringlaufbahn des Außenrings abwälzen. Hierzu kann vorteilhafter Weise die Oberfläche der Außenringlaufbahn entsprechend abriebfest ausgebildet sein, beispielsweise auch durch ein entsprechendes Oberflächenbehandlungsverfahren und/oder durch Aufbringen einer entsprechenden zusätzlichen Materialschicht.

Die Außenringlaufbahn kann eben oder profiliert ausgebildet sein. Eine profilierte Ausgestaltung der Außenringlaufbahn kann beispielsweise zur Führung der Wälzkörper auf der Außenringlaufbahn dienen. Eine ebene Ausformung der Außenringlaufbahn kann hingegen beispielsweise eine gewisse axiale Verschiebbarkeit der Wälzkörper auf der Außenringlaufbahn erlauben.

Ein Wälzlager kann wenigstens eine Dichtung aufweisen, um ein Austreten von Schmiermittel aus dem Wälzlager oder ein Eintreten von Schmutz oder Feuchtigkeit in das Wälzlager zu verhindern oder zu reduzieren.

Gemäß einer bevorzugten Ausgestaltung der Erfindung kann es vorteilhaft sein, dass die Dichtung zumindest abschnittsweise, bevorzugt vollständig aus einem elastischen Material geformt ist. Es kann des Weiteren vorteilhaft sein, dass die Dichtung formschlüssig an dem Innenring und/oder dem Außenring fixiert ist.

Gemäß einer vorteilhaften Ausgestaltung der Erfindung kann vorgesehen sein, dass die Abstandsmittel punktartig ausgeführt sind. Der Vorteil dieser Ausgestaltung liegt darin, dass sich hierdurch möglichst große Zwischenräume zwischen den Abstandsmitteln ergeben, die beispielsweise zum Durchfluss von Schmieröl oder - fett genutzt werden können

Es kann gemäß einer weiteren bevorzugten Weiterentwicklung der Erfindung auch vorgesehen sein, dass die Abstandsmittel kreisringabschnittsartig ausgebildet sind. Es kann hierdurch erreicht werden, dass größere axiale Kräfte zwischen der Nutmutter und dem Wälzlager übertragen werden können.

Grundsätzlich ist es natürlich auch möglich, kreisringförmige sowie punktartige Abstandsmittel gemeinsam an einer Sicherungsscheibe auszubilden.

Es ist in diesem Zusammenhang ferner besonders bevorzugt, dass die Anzahl der Abstandsmittel wenigstens drei beträgt, um eine statisch bestimmte Anlage der Sicherungsscheibe gegenüber dem Wälzlager zu garantieren.

Des Weiteren kann es gemäß einer ebenfalls vorteilhaften Ausgestaltung der Erfindung vorgesehen sein, dass die Abstandsmittel im Wesentlichen identisch ausgebildet sind, was fertigungstechnische und Kostenvorteile mit sich bringen kann.

Gemäß einer weiteren besonders bevorzugten Ausführungsform der Erfindung kann es vorgesehen sein, dass die Abstandsmittel äquidistant über den Umfang der ringförmigen Sicherungsscheibe angeordnet sind, so dass eine möglichst gleichförmige Anlage an das Wälzlager erfolgen kann.

Des Weiteren kann die Erfindung auch dahingehend weiterentwickelt sein, dass an der ringförmigen Sicherungsscheibe in Umfangsrichtung zwischen zwei benachbarten Abstandsmitteln wenigstens ein Identifikationsmittel zur Identifikation der Sicherungsscheibe ausgebildet ist. Bei dem Identifikationsmittel kann es sich insbesondere um produkt- und/oder fertigungsbezogene Informationen handeln, welche ein automatisiertes Handling und Montage der Sicherungsscheibe, beispielsweise durch einen Roboter, erlauben.

In einer ebenfalls bevorzugten Ausgestaltungsvariante der Erfindung kann auch vorgesehen sein, dass die ringförmige Sicherungsscheibe an ihrem radial äußeren Umfang eine Mehrzahl von Laschen aufweist, welche zwecks eines Formschlusses in Umfangsrichtung mit der Nutmutter in axialer Richtung plastisch verschwenkbar sind. Auch kann es vorteilhaft sein, die Erfindung dahingehend weiterzuentwickeln, dass die ringförmige Sicherungsscheibe an ihrem radial inneren Umfang eine Lasche aufweist, welche in Umfangsrichtung formschlüssig in die Spannhülse eingreift.

Der Vorteil, der sich hierdurch realisieren lässt, ist, dass auf sichere und montagefreundliche Weise eine formschlüssige Sicherung der Nutmutter gegenüber der Spannhülse in Umfangsrichtung erfolgen kann, wodurch beispielsweise eine definierte Vorspannung auf das Wälzlager stabil eingehalten werden kann.

Gemäß einer weiteren zu bevorzugenden Ausgestaltung des Erfindungsgegenstandes kann vorgesehen sein, dass die Spannhülse eine konisch ausgeführte Mantelfläche aufweist, wobei ein Innenring des Wälzlagers eine hierzu korrespondierend konische radial innere Mantelfläche besitzt, so dass die Nutmutter den Innenring über die Sicherungsscheibe axial spielfrei gegen die Spannhülse fixiert.

Schließlich kann die Erfindung auch in vorteilhafter Weise dahingehend ausgeführt sein, dass die Nutmutter über ein Gewinde mit der Spannhülse verbunden ist, wodurch sich die Vorspannkraft auf das Wälzlager besonders gut einstellen lässt.

Nachfolgend wird die Erfindung anhand von Figuren ohne Beschränkung des allgemeinen Erfindungsgedankens näher erläutert werden.

Es zeigt:
- Figur 1: eine Wälzlageranordnung in einer schematischen Axialschnittansicht,
- Figur 2: eine erste Ausführungsform einer Sicherungsscheibe in einer freigestellten perspektivischen Ansicht,
- Figur 3: eine zweite Ausführungsform einer Sicherungsscheibe in einer freigestellten perspektivischen Ansicht.

Die Figur zeigt eine Wälzlageranordnung 1 umfassend ein auf einer Spannhülse 2 angeordnetes Wälzlager 3. Das gezeigte Wälzlager 1 in dem Ausführungsbeispiel ist als zweireihiges Tonnenrollenlager mit tonnenförmigen Wälzkörpern 16 konfiguriert. Diese wälzen zwischen dem Innenring 9 und dem Außenring 17. Das Wälzlager 3 ist einseitig axial mittels einer Nutmutter 4 gesichert, die über ein Gewinde 7 mit der Spannhülse 2 verbunden ist.

Axial zwischen der Nutmutter 4 und dem Wälzlager 3 ist eine ringförmige Sicherungsscheibe 5 angeordnet, mittels derer eine Verdrehsicherung zwischen der Spannhülse 2 und der Nutmutter 4 ausgebildet ist, um eine durch die Verdrehung der Nutmutter 4 gegenüber der Spannhülse 2 definierten axialen Vorspannung durch die Nutmutter 4 auf das Wälzlager 3 mechanisch zu sichern. Die Spannhülse 2 weist eine konisch ausgeführte Mantelfläche 6 auf, wobei ein Innenring 9 des Wälzlagers 3 eine hierzu korrespondierend konische radial innere Mantelfläche 10 besitzt, so dass die Nutmutter 4 den Innenring 9 über die Sicherungsscheibe 5 axial spielfrei gegen die Spannhülse 2 fixiert.

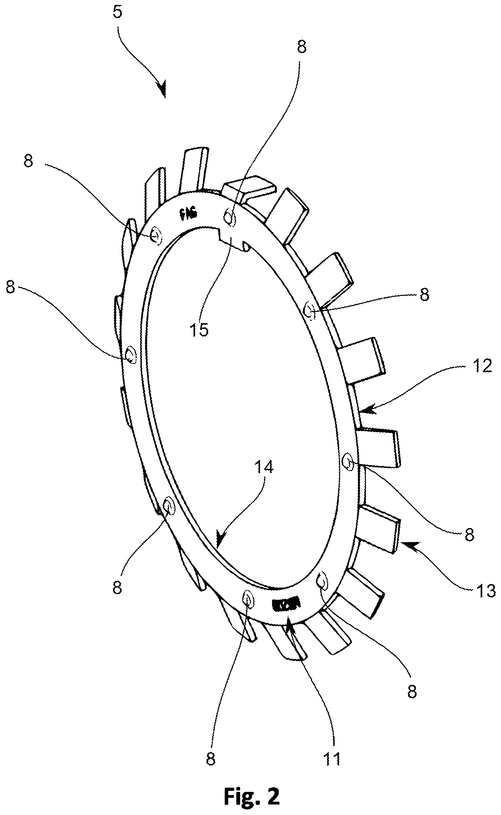

Die ringförmige Sicherungsscheibe 5 weist ferner eine Mehrzahl von monolithisch durch Verstemmung mit der Sicherungsscheibe 5 ausgebildeten und axial wirkenden Abstandsmittel 8 auf, welche in Umfangsrichtung voneinander beabstandet angeordnet sind. Dies lässt sich auch gut aus der Zusammenschau mit der Figur 2-3 erkennen. Hierdurch wird insbesondere kein umlaufend geschlossener, kreisringförmiger Kontakt zwischen der Sicherungsscheibe 5 und dem Wälzlager 3 hergestellt, sondern voneinander umfänglich beabstandete Kontaktpunkte oder Kontaktlinien.

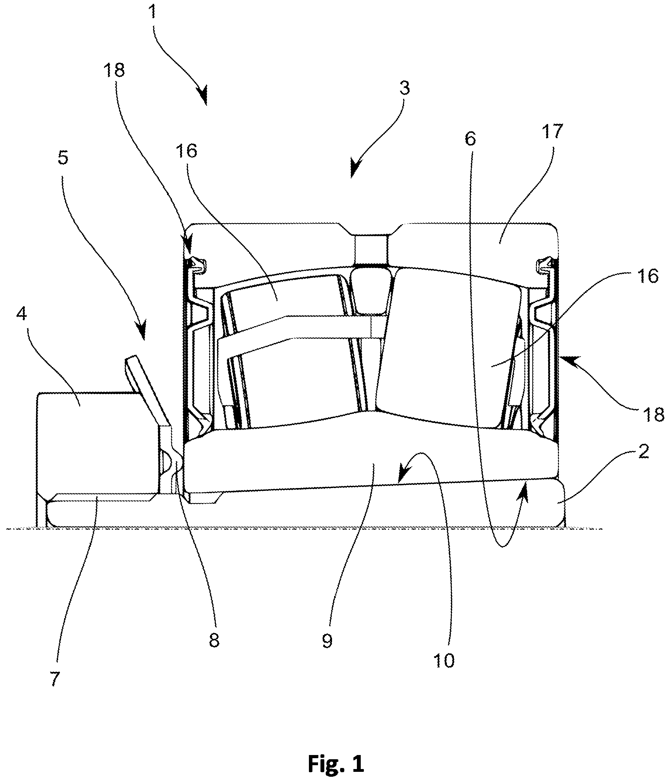

Wie sich anhand der Figur 1 erkennen lässt, vergrößern die Abstandsmittel 8 den axialen Abstand zwischen der Nutmutter 4 und dem Innenring 9 des Wälzlagers 3, wodurch die Gefahr eines unbeabsichtigten Kontakts zwischen der Dichtung 18 des Wälzlagers 3 und der Sicherungsscheibe 5 bei einer Biegung der Spannhülse 2 reduziert ist.

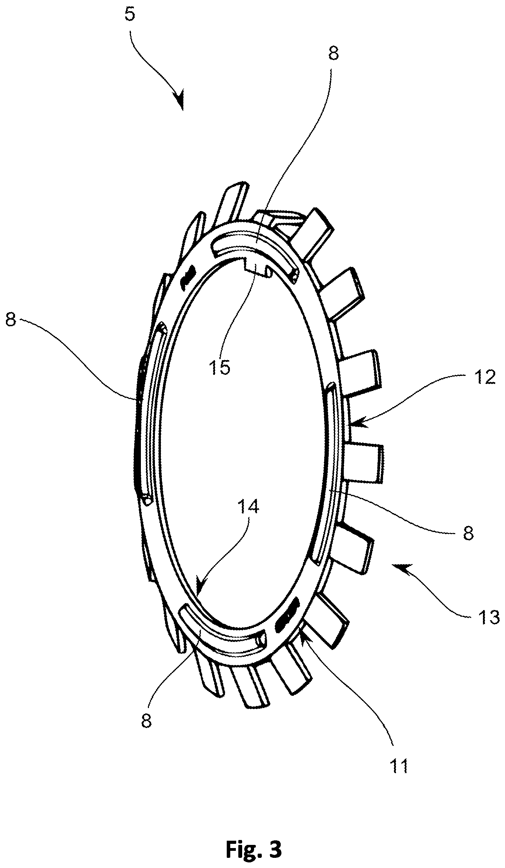

Aus der Figur 2 ist ersichtlich, dass die Abstandsmittel 8 punktartig oder aber auch, wie in der Figur 3 gezeigt, kreisringabschnittsartig ausgebildet sein können. Die Abstandsmittel 8 sind jeweils im Wesentlichen identisch ausgebildet und äquidistant über den Umfang der ringförmigen Sicherungsscheibe 5 angeordnet.

In den Figuren 2-3 ist ferner gezeigt, dass an der ringförmigen Sicherungsscheibe 5 in Umfangsrichtung zwischen zwei benachbarten Abstandsmitteln 8 wenigstens ein Identifikationsmittel 11 zur Identifikation der Sicherungsscheibe 5 ausgebildet ist.

Die ringförmige Sicherungsscheibe 5 besitzt an ihrem radial äußeren Umfang 12 eine Mehrzahl von Laschen 13, welche zwecks eines Formschlusses in Umfangsrichtung mit der Nutmutter 4 in axialer Richtung plastisch verschwenkbar sind, was sich auch aus der Zusammenschau der Figuren 2-3 mit der Figur 1 erkennen lässt. Die ringförmige Sicherungsscheibe 5 weist an ihrem radial inneren Umfang 14 eine Lasche 15 auf, welche in Umfangsrichtung formschlüssig in die Spannhülse 2 eingreift.

Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung 'erste' und 'zweite' Merkmal definieren, so dient diese Bezeichnung der Unterscheidung zweier gleichartiger Merkmale, ohne eine Rangfolge festzulegen. Die Erfindung wird durch die nachfolgenden Ansprüche definiert.

### Bezugszeichenliste

1 Wälzlageranordnung
2 Spannhülse
3 Wälzlager
4 Nutmutter
5 Sicherungsscheibe
6 Mantelfläche
7 Gewinde
8 Abstandsmittel
9 Innenring
10 Mantelfläche
11 Identifikationsmittel
12 Umfang
13 Laschen
14 Umfang
15 Lasche
16 Wälzkörper
17 Außenring
18 Dichtung

## Patentansprüche

1. Wälzlageranordnung (1) umfassend ein auf einer Spannhülse (2) angeordnetes Wälzlager (3), wobei das Wälzlager (3) zumindest einseitig axial mittels einer Nutmutter (4) gesichert ist und axial zwischen der Nutmutter (4) und dem Wälzlager (3) eine ringförmige Sicherungsscheibe (5) angeordnet ist, mittels derer eine Verdrehsicherung zwischen der Spannhülse (2) und der Nutmutter (4) ausgebildet ist,
**dadurch gekennzeichnet, dass**
die ringförmige Sicherungsscheibe (5) eine Mehrzahl von monolithisch durch Verstemmung mit der Sicherungsscheibe (5) ausgebildeten und axial wirkenden Abstandsmittel (8) aufweist, welche in Umfangsrichtung voneinander beabstandet angeordnet sind.

2. Wälzlageranordnung (1) nach Anspruch 1,
**dadurch gekennzeichnet, dass**
die Abstandsmittel (8) punktartig ausgeführt sind.

3. Wälzlageranordnung (1) nach einem der vorherigen Ansprüche,
**dadurch gekennzeichnet, dass**
die Abstandsmittel (8) kreisringabschnittsartig ausgebildet sind.

4. Wälzlageranordnung (1) nach einem der vorherigen Ansprüche,
**dadurch gekennzeichnet, dass**
die Abstandsmittel (8) im Wesentlichen identisch ausgebildet sind.

5. Wälzlageranordnung (1) nach einem der vorherigen Ansprüche,
**dadurch gekennzeichnet, dass**
die Abstandsmittel (8) äquidistant über den Umfang der ringförmigen Sicherungsscheibe (5) angeordnet sind.

6. Wälzlageranordnung (1) nach einem der vorherigen Ansprüche,
**dadurch gekennzeichnet, dass**
an der ringförmigen Sicherungsscheibe (5) in Umfangsrichtung zwischen zwei benachbarten Abstandsmitteln (8) wenigstens ein Identifikationsmittel (11) zur Identifikation der Sicherungsscheibe (5) ausgebildet ist.

7. Wälzlageranordnung (1) nach einem der vorherigen Ansprüche,
**dadurch gekennzeichnet, dass**
die ringförmige Sicherungsscheibe (5) an ihrem radial äußeren Umfang (12) eine Mehrzahl von Laschen (13) aufweist, welche zwecks eines Formschlusses in Umfangsrichtung mit der Nutmutter (4) in axialer Richtung plastisch verschwenkbar sind.

8. Wälzlageranordnung (1) nach einem der vorherigen Ansprüche,
**dadurch gekennzeichnet, dass**
die ringförmige Sicherungsscheibe (5) an ihrem radial inneren Umfang (14) eine Lasche (15) aufweist, welche in Umfangsrichtung formschlüssig in die Spannhülse (2) eingreift.

9. Wälzlageranordnung (1) nach einem der vorherigen Ansprüche,
**dadurch gekennzeichnet, dass**
die Spannhülse (2) eine konisch ausgeführte Mantelfläche (6) aufweist, wobei ein Innenring (9) des Wälzlagers (3) eine hierzu korrespondierend konische radial innere Mantelfläche (10) besitzt, so dass die Nutmutter (4) den Innenring (9) über die Sicherungsscheibe (5) axial spielfrei gegen die Spannhülse (2) fixiert.

10. Wälzlageranordnung (1) nach einem der vorherigen Ansprüche,
**dadurch gekennzeichnet, dass**
die Nutmutter (4) über ein Gewinde (7) mit der Spannhülse (2) verbunden ist.

## Claims

1. A rolling bearing arrangement (1) comprising a rolling bearing (3) arranged on a clamping sleeve (2), wherein the rolling bearing (3) is secured axially at least on one side by means of a slotted nut (4) and an annular locking washer (5) is arranged axially between the slotted nut (4) and the rolling bearing (3), by means of which an anti-rotation device is formed between the clamping sleeve (2) and the slotted nut (4),
**characterised in that**
the annular locking washer (5) has a plurality of axially acting spacers (8) formed monolithically by crimping with the locking washer (5), which are arranged spaced apart from each other in the circumferential direction.

2. The rolling bearing arrangement (1) according to claim 1,
**characterised in that**
the spacers (8) are designed as points.

3. The rolling bearing arrangement (1) according to any one of the preceding claims,
**characterised in that**
the spacers (8) are formed in a circular segment shape.

4. The rolling bearing arrangement (1) according to any one of the preceding claims,
**characterised in that**
the spacers (8) are substantially identical in design.

5. The rolling bearing arrangement (1) according to any one of the preceding claims,
**characterised in that**
the spacers (8) are arranged equidistantly around the circumference of the annular locking washer (5).

6. The rolling bearing arrangement (1) according to any one of the preceding claims,
**characterised in that**
at least one identification means (11) for identifying the locking washer (5) is formed on the annular locking washer (5) in the circumferential direction between two adjacent spacers (8).

7. The rolling bearing arrangement (1) according to any one of the preceding claims,
**characterised in that**
the annular locking washer (5) has a plurality of tabs (13) on its radially outer circumference (12), which are plastically pivotable in the axial direction to achieve a form fit in the circumferential direction with the slotted nut (4).

8. The rolling bearing arrangement (1) according to any one of the preceding claims,
**characterised in that**
the annular locking washer (5) has a tab (15) on its radially inner circumference (14), which engages in a form-fitting manner in the clamping sleeve (2) in the circumferential direction.

9. The rolling bearing arrangement (1) according to any one of the preceding claims,
**characterised in that**
the clamping sleeve (2) has a conically designed cylindrical surface (6), wherein an inner ring (9) of the rolling bearing (3) has a correspondingly conical radially inner cylindrical surface (10), so that the slotted nut (4) fixes the inner ring (9) axially against the clamping sleeve (2) via the locking washer (5) without play.

10. The rolling bearing arrangement (1) according to any one of the preceding claims,
**characterised in that**
the slotted nut (4) is connected to the clamping sleeve (2) via a thread (7).

## Revendications

1. Agencement de palier à roulement (1) comprenant un palier à roulement (3) agencé sur un manchon de serrage (2), dans lequel le palier à roulement (3) est bloqué axialement au moins d'un côté au moyen d'un écrou à fente (4) et une rondelle de blocage (5) annulaire est agencée axialement entre l'écrou à fente (4) et le palier à roulement (3), rondelle au moyen de laquelle un dispositif de blocage de rotation est formé entre le manchon de serrage (2) et l'écrou à fente (4),
**caractérisé en ce que**
la rondelle de blocage annulaire (5) présente une pluralité d'entretoises (8) agissant axialement formées de manière monolithique par sertissage avec la rondelle de blocage (5), lesquelles entretoises sont agencées espacées les unes des autres dans la direction circonférentielle.

2. Agencement de palier à roulement (1) selon la revendication 1,
**caractérisé en ce que**
les entretoises (8) sont réalisées comme des points.

3. Agencement de palier à roulement (1) selon l'une quelconque des revendications précédentes,
**caractérisé en ce que**
les entretoises (8) sont réalisées en forme de section annulaire circulaire.

4. Agencement de palier à roulement (1) selon l'une quelconque des revendications précédentes,
**caractérisé en ce que**
les entretoises (8) sont réalisées essentiellement identiques.

5. Agencement de palier à roulement (1) selon l'une quelconque des revendications précédentes,
**caractérisé en ce que**
les entretoises (8) sont agencées à égale distance autour de la circonférence de la rondelle de blocage (5) annulaire.

6. Agencement de palier à roulement (1) selon l'une quelconque des revendications précédentes,
**caractérisé en ce que**
au moins un moyen d'identification (11) pour identifier la rondelle de blocage (5) est formé sur la rondelle de blocage (5) annulaire dans la direction circonférentielle entre deux entretoises (8) adjacentes.

7. Agencement de palier à roulement (1) selon l'une quelconque des revendications précédentes,
**caractérisé en ce que**
la rondelle de blocage (5) annulaire présente une pluralité de languettes (13) sur sa circonférence extérieure radiale (12) qui sont pivotantes plastiquement dans la direction axiale dans le but d'un verrouillage positif dans la direction circonférentielle avec l'écrou à fente (4).

8. Agencement de palier à roulement (1) selon l'une quelconque des revendications précédentes,
**caractérisé en ce que**
la rondelle de blocage (5) annulaire présente une languette (15) sur sa circonférence intérieure radiale (14) qui vient en prise par verrouillage positif dans le manchon de serrage (2) dans la direction circonférentielle.

9. Agencement de palier à roulement (1) selon l'une quelconque des revendications précédentes, **caractérisé en ce que**
le manchon de serrage (2) présente une surface d'enveloppe (6) réalisée conique, dans lequel une bague intérieure (9) du palier à roulement (3) possède une surface d'enveloppe (10) intérieure radiale réalisée conique de manière correspondante, de sorte que l'écrou à fente (4) fixe la bague intérieure (9) axialement contre le manchon de serrage (2) par l'intermédiaire de la rondelle de blocage (5) sans jeu.

10. Agencement de palier à roulement (1) selon l'une quelconque des revendications précédentes,
**caractérisé en ce que**
l'écrou à fente (4) est relié au manchon de serrage (2) par l'intermédiaire d'un filetage (7).
